# EUROPÄISCHE PATENTSCHRIFT

(11) **EP 2 193 643 B1**
(45) Veröffentlichungstag und Bekanntmachung des Hinweises auf die Patenterteilung: **02.01.2019**
(21) Anmeldenummer: 08785087.1
(22) Anmeldetag: 25.07.2008
(51) Int. Cl.: H04L 29/06, H04W 12/08

(54) **CONTENTDISTRIBUTION MIT INHÄRENTER NUTZERORIENTIERTER BERECHTIGUNGSPRÜFUNG**
CONTENT DISTRIBUTION WITH INHERENT USER-ORIENTED AUTHORIZATION VERIFICATION
DISTRIBUTION DU CONTENU AVEC CONTRÔLE D'AUTORISATION INHÉRENT ORIENTÉ VERS L'UTILISATEUR

(30) Priorität: 05.10.2007 DE 102007048044
(43) Veröffentlichungstag der Anmeldung: 09.06.2010
(73) Patentinhaber: Deutsche Telekom AG, 53113 Bonn (DE)
(72) Erfinder: ROEBKE, Matthias, 50859 Köln (DE); KRAMARZ-VON-KOHOUT, Gerhard, 53113 Bonn (DE)
(74) Vertreter: Cohausz, Helge B.
(86) Internationale Anmeldenummer: PCT/EP2008/006134
(87) Internationale Veröffentlichungsnummer: WO 2009/046782

(56) Entgegenhaltungen:
- EP-A- 1 566 945
- WO-A-2005/098565
- WO-A-2006/067543
- DE-U1-202005 002 694
- MANDY ANDRESS: "Authentication" INFORMIT, [Online] 21. September 2001 (2001-09-21), XP002501814 Gefunden im Internet: URL:http://www.informit.com/articles/print erfriendly.aspx?p=23419> [gefunden am 2008-10-29]
- "Identity Management Framework Requirements ; OMA-RD_Identity_Management_Framework-V1_0- 20041114-D", OMA-RD_IDENTITY_MANAGEMENT_FRAMEWORK-V1_0- 20041114-D, OPEN MOBILE ALLIANCE (OMA), 4330 LA JOLLA VILLAGE DR., SUITE 110 SAN DIEGO, CA 92122 ; USA , no. 1.0 14 November 2004 (2004-11-14), pages 1-75, XP064023247, Retrieved from the Internet: URL:ftp/Public_documents/ARCH/Permanent_do cuments/ [retrieved on 2004-11-15]
- ARUN BHATE SALVI ET.AL.: "Dial M for Money", WMC '02 PROCEEDINGS OF THE 2ND INTERNATIONAL WORKSHOP ON MOBILE COMMERCE, 28 September 2002 (2002-09-28), pages 95-99, XP040139063, DOI: 10.1145/570705.570723 ISBN: 1-58113-600-5
- "MOBILITY AND SECURITY MANAGEMENT ED - MOULY M; PAUTET M-B", 1 January 1993 (1993-01-01), GSM SYSTEM FOR MOBILE COMMUNICATIONS, LASSAY-LES-CHATEAUX, EUROPE MEDIA, FR, PAGE(S) 432 - 498, XP000860007,

## Beschreibung

Die Erfindung betrifft ein Verfahren und ein System zur Überprüfung der Nutzungsberechtigung eines Zugriffs auf einen Kommunikationsdienst, insbesondere auf Medieninhalte, wobei der Kommunikationsdienst via Mobilfunk- oder Festnetz mit einem entsprechenden Kommunikationsendgerät nutzbar ist.

Nach Stand der Technik ist es heute möglich, über das Internet medialen Content, d.h. Medieninhalte wie Bilder, Daten und dergleichen, sowohl über Festnetze als auch über Mobilfunk-Netze zu verbreiten. Hier ist zwischen zwei verschiedenen Arten der Verbreitung zu unterscheiden: Diskrete Medien-Typen (gekennzeichnet durch abgeschlossene Objekte, also Dateien die durch eine feste Dateigröße charakterisiert sind), wie sie z.B. in Nachrichten-Diensten wie Email, SMS, MMS etc. zu finden sind, und kontinuierliche Medien, welche bei Streaming-Diensten vorzufinden sind. Diese Arten von multimedialen Content werden auch in den Messaging-Systemen der zukünftigen Generationen, wie z.B. in "konvergenten Messaging-Systemen" gemäß Open Mobile Alliance (OMA), vorzufinden sein.

Es ist nach heutigem Stand der Technik weder in konventionellen Messaging-Systemen (wie z.B. MMS, SMS, Email) noch in konvergenten Messaging-Systemen möglich, eine automatische Nutzerverifikation, insbesondere eine Altersverifikation durchzuführen. Mittels einer Altersverifikation wird beispielsweise überprüft, ob der

Empfänger alt genug ist, den Content nutzen zu dürfen, um so einen jugendlichen Empfänger vor jugendgefährdenden Inhalten zu schützen.

WO 2005/098565 A1 offenbart eine Altersverifikation bei der Nutzung eines Terminals zum Zugriff auf Medieninhalte.

DE 20 2005 002 694 U1 offenbart eine Altersverifikation mithilfe biometrischer Verfahren in einem Mobilfunkendgerät.

WO 2006/067543 A1 offenbart die Freigabe des Zugriffs auf Medieninhalte unter Berücksichtigung des Alters des Nutzers.

Die Aufgabe der Erfindung ist es, System und Verfahren zur Verfügung zu stellen, welche es erlauben, in Kommunikationsdiensten, d.h. Messaging Systemen (sowohl für konventionelle Dienste wie SMS, MMS, Instant Messaging als auch für künftige alternative Dienste wie z.B. konvergente Messaging Systeme) eine inhärente Nutzerverifikation, insbesondere Altersverifikation, beim Zugriff auf medialen Content, der beispielsweise im Internet angeboten wird, zur Verfügung zu stellen.

Diese Aufgabe wird erfindungsgemäß durch ein Verfahren gemäß Anspruch 1 gelöst.

Durch einen Zugriff eines Nutzers auf bestimmte Kommunikationsdienste wird somit automatisch eine Überprüfung der Nutzungsberechtigung ausgelöst.

Bei dem Kommunikationsdienst kann es sich um ein Computernetzwerk wie das Internet oder ein Intranet handeln, alternativ jedoch auch um jeden anderen Informations- und/oder Mediendienst.

Bei dem Endgerät kann es sich, um ein Mobilfunkendgerät handeln, es kann sich aber auch um ein Endgerät für Festnetzkommunikation, beispielsweise einen PC handeln. Grundsätzlich ist die vorliegende Erfindung geeignet für Kommunikationsdienste in beliebigen Kommunikationsnetzen mit stationären oder mobilen Endgeräten.

Durch den Rückgriff auf eine Überprüfungsinstanz, mittels derer die Prüfung der Nutzungsberechtigung erfolgt, wobei der Nutzer jedoch nicht oder nur mit einem unverhältnismäßig hohen technischen Aufwand diese Überprüfungsinstanz oder den zugehörigen Kommunikationsvorgang manipulieren kann, ist eine Überprüfung der Nutzungsberechtigung mit einer sehr hohen Zuverlässigkeit möglich. Das Generieren der Verifikationsanfrage seitens des Kommunikationsdienstes erfolgt dabei automatisch bei jedem Versuch, auf geschützte Daten und/oder geschützte Dienste zuzugreifen.

Weitere vorteilhafte Ausgestaltungen der Erfindung sind in den Unteransprüchen angegeben.

In einer bevorzugten Ausführungsform überprüft die Überprüfungsinstanz die Nutzungsberechtigung durch Abfrage der SIM oder der USIM des Endgerätes. Hierdurch werden eine sehr hohe Zuverlässigkeit und Sicherheit des Systems geschaffen, da es eines unverhältnismäßig hohen Aufwandes bedürfte, die SIM oder USIM des Endgerätes zu manipulieren. Die zur Überprüfung benötigten Daten, wie beispielsweise das Geburtsdatum des Nutzers, sind hierzu auf der SIM/USIM gespeichert und werden ausgelesen und der Überprüfungsinstanz übermittelt.

Vorzugsweise ist die Überprüfungsinstanz extern des Endgerätes angesiedelt, insbesondere auf einer externen Datenverarbeitungsanlage. Die Überprüfungsinstanz kann somit beispielsweise auf einem externen Webserver angesiedelt sein.

Alternativ ist die Überprüfungsinstanz in einem geschützten Bereich des Endgerätes angesiedelt, auf den der Nutzer keinen Zugriff hat.

Hierdurch kann eine Manipulation der Überprüfungsinstanz durch einen Nutzer des Kommunikationsdienstes ausgeschlossen werden.

Nach der Überprüfung der Nutzungsberechtigung erfolgt eine Nutzerauthentisierung, durch Abfrage einer Persönlichen Identifikationsnummer (PIN) und/oder Erfassung und Auswertung biometrischer Daten. Durch eine zusätzliche Nutzerauthentisierung kann die Sicherheit des Systems bzw. Verfahrens weiter gesteigert werden, da z.B. bei einem Verlust oder Diebstahl des Endgerätes ein Zugriff auf Kommunikationsdienste wegen dieser zusätzlichen Nutzerauthentisierung, vorausgesetzt, ein Dritter kann sie nicht erfüllen, unterbunden bleibt. Ebenso bleibt bei einer zusätzlichen Nutzerauthentisierung der Zugriff auf Content, der nur für Erwachsene geeignet ist, unterbunden, wenn ein Kind das Endgerät seiner Eltern nutzt.

Die Sicherheit kann weiter durch den Einsatz kryptographischer Mechanismen gesteigert werden, indem die Meldung der Überprüfungsinstanz beispielsweise mit einer digitalen Signatur versehen wird, um sicherzustellen, dass die Meldung nicht manipuliert und tatsächlich von der Überprüfungsinstanz generiert wurde.

Ein Ausführungsbeispiel des erfindungsgemäßen Verfahrens oder Systems sind in den Figuren dargestellt und werden nachfolgend erläutert. Es zeigen:
- Fig. 1: Eine schematische Darstellung von Kommunikationsdienst und Mobilfunkendgerät bei einem Zugriff auf den Kommunikationsdienst;
- Fig. 2: ein Ablaufschema eines Teils des Ausführungsbeispieles des erfindungsgemäßen Verfahrens;
- Fig. 3: ein Ablaufschema des Ausführungsbeispieles des erfindungsgemäßen Verfahrens.

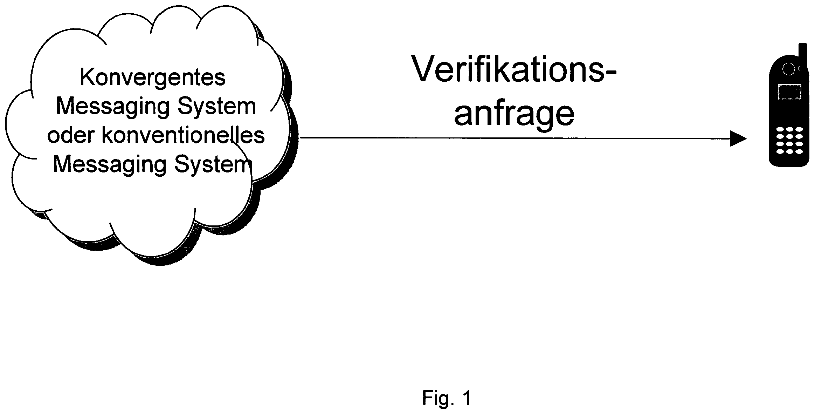

Die Grundidee der Erfindung beruht darauf, im Nachrichtenaustausch von Kommunikationsdiensten 1 ein Protokollelement (mit entsprechenden Parametern) zu etablieren, welches im Endgerät 2 des Nutzers einen Verifikationsprozess auslöst, wie dies in Figur 1 dargestellt ist. Bei dem Endgerät kann es sich, wie in Figur 1 dargestellt, um ein Mobilfunkendgerät handeln, es kann sich aber auch um ein Endgerät für Festnetzkommunikation (beispielsweise: PC) handeln. Grundsätzlich ist die vorliegende Erfindung geeignet für Kommunikationsdienste in beliebigen Kommunikationsnetzen mit stationären oder mobilen Endgeräten.

Wenn dieses Protokollelement das Endgerät 2 des Nutzers erreicht, wird eine Verifikationsprozedur angestoßen, welche eine Anfrage an eine "Vertrauenswürdige Instanz" 3 auslöst. Diese "Vertrauenswürdige Instanz" 3 kann die SIM/USIM des Endgerätes 2 des Nutzers oder eine externe Applikation außerhalb des Endgerätes 2 (z.B. eine Applikation auf einem "Berechtigungs-Server") oder eine Applikation, welche sich in einem geschützten Bereich des Endgerätes 2 befindet, sein.

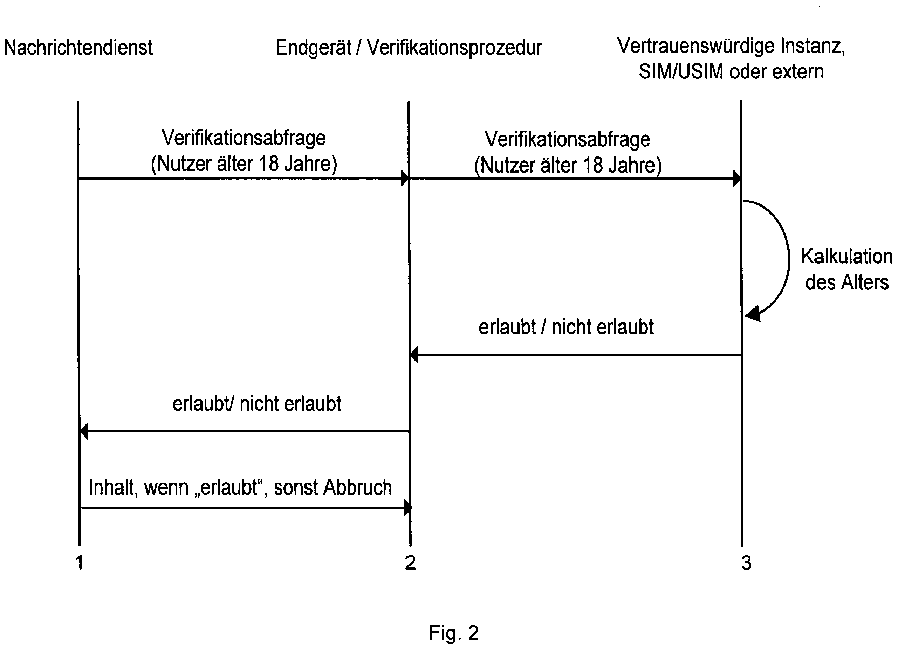

Das Protokollelement ist erfindungsgemäß so parametrisiert, dass die Antwort, welche an den Messaging-Dienst 1 zurückgeliefert wird, nur zwei Werte annehmen kann - erlaubt / nicht erlaubt. Die Figur 2 illustriert diesen Prozess beispielhaft anhand einer Altersverifikation.

Bei dem Zugriff eines Nutzers mittels eines Endgerätes 2 auf einen bestimmten Dienst 1 wird automatisch seitens des Dienstes 1 eine Verifikationsanfrage (Verification request) generiert und an das genutzte Endgerät 2 übermittelt. Durch diese Anfrage (Verification request) wird eine Verifikationsprozedur eingeleitet, die die Anfrage (Verification request) weiterleitet an eine Überprüfungsinstanz 3, nämlich eine intern oder extern des Endgerätes 2 angesiedelte vertrauenswürdige Instanz 3, die eine Überprüfung der Nutzungsberechtigung vornimmt, in dem in Figur 2 dargestellten Beispiel durch eine Kalkulation des Alters des Nutzers des Kommunikationsdienstes 1.

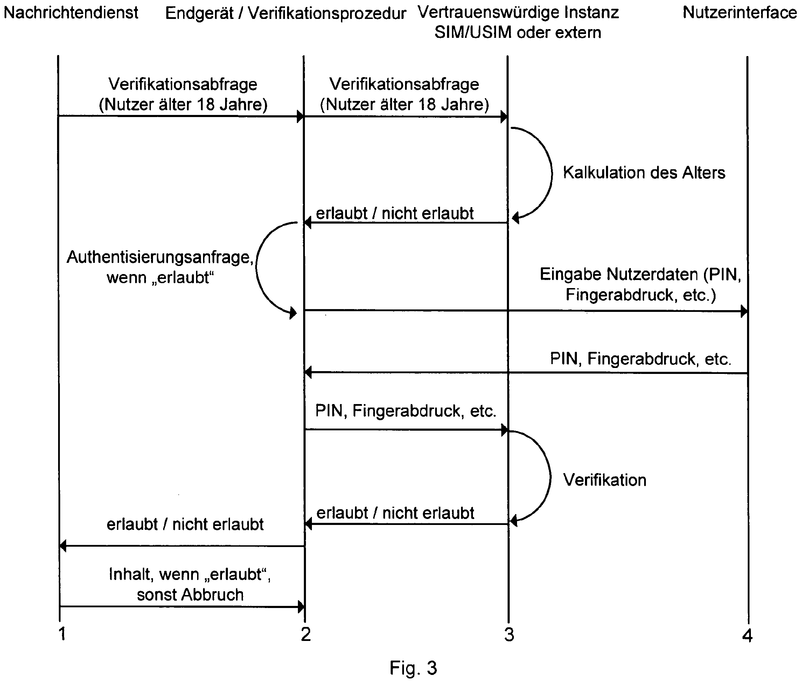

Die Überprüfungsinstanz 3 erzeugt nach Kalkulation des Alters des Nutzers anhand der der vertrauenswürdigen Instanz 3 vorliegenden Daten eine entsprechende Meldung bezüglich der Nutzungsberechtigung (Allow/Deny) und übergibt diese Meldung an das Endgerät 2 zurück, welches diese Meldung (Allow/Deny) seinerseits weiterleitet an den gewählten Dienst 1. Sofern der Meldung (Allow/Deny) zufolge der Zugriff auf den Kommunikationsdienst 1 berechtigt ist, erfolgt eine zusätzliche Authentisierungsprozedur gemäß Figur 3, andernfalls erfolgt keine Datenfreigabe (Content if Allow, else abort).

Mit Hilfe dieser Methodik ist sichergestellt, dass keine vertraulichen bzw. persönlichen Nutzerdaten an die anfragende Instanz 1 zurückgeliefert werden. Um den oben beschrieben Ablauf zu gewährleisten, müssen entsprechende Nutzerdaten (im obigen Beispiel das Geburtsdatum des Nutzers) bei der "Vertrauenswürdigen Instanz" 3 hinterlegt sein. Um sicherzustellen, dass die Antwort (Allow/Deny) wirklich von der "Vertrauenswürdigen Instanz" 3 generiert wurde, kann diese erfindungsgemäß mit einer digitalen Signatur versehen werden. Ein weiteres Beispiel für die Verifikationsabfrage ist die Kreditwürdigkeit.

In Nachrichtendiensten 1, welche mit so genannten Notifikations-Prozessen arbeiten, kann dieses Nachrichtenelement schon in die Notifikation eingebettet werden, so dass, in Abhängigkeit von dem Ergebnis der Verifikation, der Content geladen oder die Notifikation verworfen werden.

Der Nutzer muss sich zusätzlich autorisieren, wie dies in dem Ausführungsbeispiel gemäß Figur 3 dargestellt ist.

Diese Autorisierung kann zum Beispiel durch Eingabe der PIN oder durch Abfrage von biometrischen Daten (Fingerabdruck etc.) erfolgen.

Bei dem Ausführungsbeispiel gemäß Figur 3 erfolgt bei dem Zugriff eines Nutzers mittels eines Endgerätes 2 auf einen bestimmten Dienst 1 wiederum automatisch seitens des Dienstes 1 eine Verifikationsanfrage (Verification request) an das genutzte Endgerät 2. Durch diese Anfrage (Verification request) wird eine Verifikationsprozedur eingeleitet, die die Anfrage (Verification request) weiterleitet an eine Überprüfungsinstanz 3, nämlich eine intern oder extern des Endgerätes angesiedelte vertrauenswürdige Instanz 3, die eine Überprüfung der Nutzungsberechtigung vornimmt durch eine Kalkulation des Alters des Nutzers des Kommunikationsdienstes 1 anhand der der vertrauenswürdigen Instanz 3 vorliegenden Daten.

Die Überprüfungsinstanz 3 erzeugt nach Kalkulation des Alters des Nutzers eine entsprechende Meldung bezüglich der Nutzungsberechtigung (Allow/Deny) und übergibt diese Meldung an das Endgerät 2 zurück, welches diese Meldung (Allow/Deny). Sofern diese Meldung der Überprüfungsinstanz 3 grundsätzlich die Nutzungsberechtigung bestätigt, wird eine Authentisierungsprozedur eingeleitet.

Hierbei wird durch eine Eingabe von Nutzerdaten, wie beispielsweise einer Persönlichen Identifikationsnummer (PIN) oder der Erfassung biometrischer Daten, wie beispielsweise eines Fingerabdruckes, mittels entsprechender Lesegeräte über ein Nutzerinterface 4 eine weitere Authentisierung des Benutzers vorgenommen. Die erfassten Daten werden von dem Nutzerinterface 4 weitergegeben an das Endgerät 2, welches diese Daten wiederum zwecks Verifikation der Überprüfungsinstanz 3 zuleitet.

Nach Überprüfung der Authentisierungsdaten durch die Prüfinstanz 3 wird eine entsprechende Meldung (Allow/Deny) generiert und über das Endgerät 2 an den gewählten Dienst 1 übermittelt, wie dies in Figur 3 dargestellt ist.

Sofern der Meldung (Allow/Deny) zufolge der Zugriff auf den Kommunikationsdienst 1 berechtigt ist, stellt dieser Dienst 1 die gewünschten Inhalte bereit und übermittelt diese an das benutzte Endgerät 2, andernfalls erfolgt keine Datenfreigabe (Content if Allow, else abort).

Durch diese zweistufige Prüfung der Nutzungsberechtigung durch die vertrauenswürdige Instanz 3 wird somit ein Höchstmaß an Sicherheit bei dem Zugriff auf einen Kommunikationsdienst 1 durch einen Benutzer gewährleistet.

Durch diese zusätzliche Abfrage mittels eines Nutzerinterfaces 4 kann sichergestellt werden, dass es sich bei dem aktuellen Nutzer des Endgerätes 2 tatsächlich um den Nutzer handelt, für den die Verifikationsanfrage initiiert wurde.

Als Randbedingung gilt hier, dass das entsprechende Identifikationsdatum (Biometrische Datum, PIN etc.) bei der "Vertrauenswürdigen Instanz" 3 (SIM/USIM; oder eine Applikation, welche in einem gesicherten Bereich der Endgeräte Hardware verankert ist; oder eine externe Applikation etc.) verifiziert werden kann, indem dort die hierzu relevanten Daten (PIN, kryptographische Schlüssel o.ä.) hinterlegt sind.

Eine elementare Realisierung des Ausführungsbeispiels gemäß Figur 3 im Hinblick auf eine Altersverifikation stellt die Speicherung des Geburtsdatums des Nutzers auf seiner SIM/USIM dar, wobei die SIM/USIM mittels der Eingabe einer nur dem Nutzer bekannten PIN zu aktivieren ist. Die zur Überprüfung benötigten Daten sind hierzu auf der SIM/USIM gespeichert und werden der Überprüfungsinstanz übermittelt.

## Patentansprüche

1. Verfahren zur Überprüfung der Nutzungsberechtigung eines Zugriffs auf Medieninhalte eines Kommunikationsdienstes (1), wobei der Kommunikationsdienst (1) mittels eines Endgerätes (2) via Mobilfunk- und/oder Festnetz nutzbar ist, seitens des Kommunikationsdienstes (1) eine Verifikationsanfrage generiert und an das Endgerät (2) übermittelt wird, und seitens des Endgerätes (2) ein Verifikationsprozess ausgelöst wird, bei dem die Nutzungsberechtigung mittels einer Überprüfungsinstanz (3) durch Kalkulation des Alters des Nutzers oder durch Prüfung der Kreditwürdigkeit überprüft wird, und wobei die Überprüfungsinstanz (3) nach der Prüfung der Nutzungsberechtigung eine entsprechende Meldung erzeugt und diese Meldung direkt oder indirekt an den Kommunikationsdienst (1) übermittelt wird, **dadurch gekennzeichnet, dass**, wenn die Überprüfung der Nutzungsberechtigung ein positives Ergebnis liefert, eine zusätzliche Nutzerauthentisierung durch Abfrage einer persönlichen Identifikationsnummer, PIN, und/oder Erfassung und Auswertung biometrischer Daten erfolgt.

2. Verfahren nach Anspruch 1, **dadurch gekennzeichnet, dass** die Überprüfungsinstanz (3) die Nutzungsberechtigung durch Abfrage der SIM oder der USIM des Endgerätes (2), insbesondere eines Mobilfunkendgerätes, überprüft.

3. Verfahren nach Anspruch 1 oder 2, **dadurch gekennzeichnet, dass** die Überprüfungsinstanz (3) extern des Endgerätes (2) angesiedelt ist, insbesondere auf einer externen Datenverarbeitungsanlage.

4. Verfahren nach Anspruch 1 oder 2, **dadurch gekennzeichnet, dass** die Überprüfungsinstanz (3) in einem geschützten Bereich des Endgerätes (2) angesiedelt ist.

5. Verfahren nach einem der vorherigen Ansprüche, **dadurch gekennzeichnet, dass** die Meldung der Überprüfungsinstanz (3) kryptographisch gesichert wird, insbesondere mit einer digitalen Signatur versehen wird.

## Claims

1. Method for verifying the usage authorization of an access to media contents of a communications service (1), wherein the communications service (1) can be used by means of a terminal device (2) via a mobile and/or fixed network, a verification request is generated by the communications service (1) and transmitted to the terminal device (2), and a verification process is triggered by the terminal device (2), in which the usage authorization is verified by means of a verification instance (3) by calculating the age of the user or by checking the creditworthiness, and wherein the verification instance (3), after verifying the usage authorization, generates a corresponding message and this message is transmitted directly or indirectly to the communication service (1), **characterized in that** if the verification of the usage authorization delivers a positive result, additional user authentication takes place by requesting a personal identification number, PIN, and/or recording and evaluation of biometric data.

2. Method according to claim 1, **characterized in that** the verification instance (3) verifies the usage authorization by querying the SIM or the USIM of the terminal (2), in particular a mobile radio terminal.

3. Method 1 according to claim 1 or 2, **characterized in that** the verification instance (3) is located externally to the terminal device (2), in particular on an external data processing system.

4. Method 2 according to claim 1 or 2, **characterized in that** the verification instance (3) is located in a protected area of the terminal device (2).

5. Method 2 according to one of the previous claims, **characterized in that** the message of the verification instance (3) is cryptographically secured, in particular is provided with a digital signature.

## Revendications

1. Procédé de vérification de l'autorisation d'utilisation d'un accès à des contenus médiatiques d'un service de communication (1), dans lequel le service de communication (1) peut être utilisé au moyen d'un terminal (2) via un réseau mobile et/ou fixe, une demande de vérification est générée par le service de communication (1) et transmise au terminal (2) et un processus de vérification est déclenché par le terminal (2), dans lequel l'autorisation d'utilisation est contrôlée au moyen un instance de contrôle (3) en déterminant l'âge de l'utilisateur ou par vérification de solvabilité, et dans laquelle l'instance de contrôle (3) génère un message correspondant après vérification de l'autorisation d'utilisation et ce message est transmis directement ou indirectement au service de communication (1), **caractérisé en ce que**, si la vérification de l'autorisation d'utilisation donne un résultat positif, une authentification utilisateur supplémentaire est effectuée en interrogeant un numéro d'identification personnel, PIN, et/ou en enregistrant et en évaluant les données biométriques.

2. Procédé 2 selon la revendication 1, **caractérisé en ce que** l'autorité de vérification (3) vérifie l'autorisation d'utilisation en interrogeant la carte SIM ou la USIM du terminal (2), en particulier un terminal radio mobile.

3. Procédé selon la revendication 1 ou 2, **caractérisé en ce que** l'instance de vérification (3) est située à l'extérieur du dispositif terminal (2), en particulier sur un système de traitement de données externe.

4. Procédé selon la revendication 1 ou 2, **caractérisé en ce que** l'instance de contrôle (3) est située dans une zone protégée du dispositif terminal (2).

5. Procédé selon l'une des revendications précédentes, **caractérisé en ce que** l'instance de contrôle (3) est sécurisé cryptographiquement, en particulier muni d'une signature numérique.
